Europäisches Patentamt

European Patent Office

Office européen des brevets

(19)

(11) Veröffentlichungsnummer: **0 295 412 B1**

(12) **EUROPÄISCHE PATENTSCHRIFT**

(45) Veröffentlichungstag der Patentschrift: **05.08.92**

(51) Int. Cl.5: **A62D 1/00**

(21) Anmeldenummer: **88107121.1**

(22) Anmeldetag: **04.05.88**

(54) **Löschwasserzusatz.**

(30) Priorität: **15.05.87 DE 3716304**

(43) Veröffentlichungstag der Anmeldung:
**21.12.88 Patentblatt 88/51**

(45) Bekanntmachung des Hinweises auf die
Patenterteilung:
**05.08.92 Patentblatt 92/32**

(84) Benannte Vertragsstaaten:
**AT BE CH DE ES FR GB GR IT LI LU NL SE**

(56) Entgegenhaltungen:
EP-A- 0 199 897      US-A- 3 229 769
US-A- 3 345 289      US-A- 3 407 138
US-A- 3 666 707      US-A- 3 684 707
US-A- 4 610 311

JAPANESE PATENTS GAZETTE, Teil CH, Woche D46, 23.Dezember 1981, Derwent Publications LTD, London, GB; & JP-A-81 125 066 (OTSUKA KAGAKU YAKUHIN) 01-10-1981

(73) Patentinhaber: **von Blücher, Hubert**
**Freytagstrasse 45**
**W-4000 Düsseldorf(DE)**

Patentinhaber: **von Blücher, Hasso**
**Columbusstrasse 58**
**W-4000 Düsseldorf 1(DE)**

Patentinhaber: **de Ruiter, Ernest, Dr.**
**Höhenstrasse 57a**
**W-5090 Leverkusen 3(DE)**

(72) Erfinder: **von Blücher, Hubert**
**Freytagstrasse 45**
**W-4000 Düsseldorf(DE)**
Erfinder: **von Blücher, Hasso**
**Columbusstrasse 58**
**W-4000 Düsseldorf 1(DE)**
Erfinder: **de Ruiter, Ernest, Dr.**
**Höhenstrasse 57a**
**W-5090 Leverkusen 3(DE)**

(74) Vertreter: **Eggert, Hans-Gunther, Dr. et al**
**Räderscheidtstrasse 1**
**W-5000 Köln 41(DE)**

EP 0 295 412 B1

## Beschreibung

Die vorliegende Erfindung betrifft einen Löschwasserzusatz, welcher einen stark quellenden wasserunlöslichen hochpolymeren Stoff als Gelbildner enthält. In der EP-A-199 897 werden derartige hochpolymere Substanzen beschrieben, die man dem Löschwasser als Quellkörper zusetzt. Diese Substanzen sind hochsaugaktiv und können in kurzer Zeit bis zum 500-fachen ihres Gewichts an Wasser aufnehmen ohne sich jedoch dabei in Wasser zu lösen. Diese Substanzen liegen dann in Form von durch Hydratation stark gequollenen Gelteilchen vor, die im Löschwasser dispergiert sind. Gibt man zu den so gequollenen Gelteilchen einen Wasserüberschuß, so verbleibt das überschüssige Wasser als reine Wasserphase. Die Viskosität des Löschwassers ist nach Zugabe der Gelbildnersubstanz gegenüber der Viskosität reinen Wassers nur geringfügig erhöht. Die ausreichend niedrige Viskosität ist bedeutsam, damit das Löschwasser weiterhin gut handhabbar, insbesondere voll pumpfähig bleibt. Die Vorteile des mit einem derartigen Löschwasserzusatz versetzten Löschwassers liegen in einer Verminderung der bei der Brandbekämpfung erforderlichen Löschwassermenge, einer Herabsetzung der Löschzeit sowie Verminderung des vom Brandherd abfließenden Löschwassers.

Trotz der ausgezeichneten Löschwirkung hat dieser bekannte Löschwasserzusatz Nachteile, die einer breiten Anwendung im Wege stehen. Beim Versetzen des Löschwassers mit der quellenden hochpolymeren Gelbildnersubstanz kann es zu Klumpenbildung kommen.

Aus den US-A-3 684 707 und 3 666 707 sind Aufschlämmungen eines Gelbildners bekannt, die in fließendes Wasser eingedüst werden, wobei innerhalb kurzer Zeit ein Quellen hervorgerufen wird. Dabei entsteht ein einheitliches Gel, welches sich nach Art einer Löschdecke über die zu schützenden Gegenstände ausbreitet. Dabei handelt es sich um eine Präventivmaßnahme.

Bei der Waldbrandbekämpfung in den Mittelmeerländern dient auch Meerwasser als Löschwasser. Das darin vorhandene Natriumchlorid führt ebenso wie im Wasser gelöste Härtebildner zu Störungen des Quellvorgangs. Zum Aufquellen der Geldbildnersubstanz werden Quellzeiten von einer bis mehreren Minuten benötigt. Zwar spielt bei der Verwendung von Löschwasser aus Tanklöschfahrzeugen, in denen die Substanzen ausreichende Zeit zum Aufquellen haben, die Quellzeit nur eine untergeordnete Rolle, aber es ist äußerst schwierig, einmal gebildete Klumpen zu dispergieren.

Die Aufgabe der vorliegenden Erfindung besteht somit darin, einen Löschwasserzusatz der eingangs genannten Art dahingehend zu verbessern, daß die vorgenannten Nachteile nicht mehr auftreten.

Die Lösung der Aufgabe liefert ein erfindungsgemäßer Löschwasserzusatz, bei dem die Geldbildnerteilchen mit Diammoniumhydrogenphosphat ummantelt sind. Das Trennmittel schützt den Gelbildner vor dem Klebrigwerden bei Wasserzutritt und somit vor dem Zusammenklumpen. Bei Verwendung des erfindungsgemäßen Trennmittels geht das Dispergieren der Gelbildnersubstanz problemlos vor sich.

Erfindungsgemäß fungiert das Trennmittel gewissermaßen als Abstandshalter zwischen den Gelbildnerteilchen und verhindert somit die Klumpenbildung.

Da die bekannten Gelbildnersubstanzen eine Quellzeit von einer bis mehreren Minuten benötigen, würde bei der Anwendung von mit solchen Zusätzen versehenem Löschwasser bei Großbränden die Lagerung des Löschwassers in Zwischenbehältern notwendig, um die erforderliche Quellzeit zu erreichen. Der Einsatz solcher Zwischenbehälter würde sich erübrigen, wenn sich die Quellzeit auf wenige Sekunden reduzieren ließe. Eine solche Reduzierung der Quellzeit kann man prinzipiell dadurch erreichen, daß man die Teilchengröße der Gelbildnerteilchen reduziert. Dadurch vergrößert man zum einen die Angriffsfläche des Wassers beim Quellvorgang und verkürzt andererseits den Diffusionsweg. Bei sehr feinen Gelbildnerteilchen erhöht sich jedoch die Gefahr des Zusammenklumpens. Es war daher bislang nicht möglich, sehr fein vermahlene Gelbildnersubstanzen ohne besondere Hilfsmittel in Wasser zu dispergieren. Wenn man nun erfindungsgemäß die Gelbildnerteilchen mit Diammoniumhydrogenphosphat ummantelt, lassen sich auch sehr fein vermahlene Gelbildnersubstanzen verwenden, ohne daß die Teilchen zusammenklumpen. Es wird somit möglich, die Gelbildnersubstanz direkt in die Schlauchleitung einzudüsen.

Diammoniumhydrogenphosphat hat sich als besonders geeignetes Trennmittel erwiesen. Bei der Brandbekämpfung im Mittelmeerraum, wo die verheerendsten Waldbrände auftreten, wird oft Meerwasser getankt. Das im Meerwasser in hoher Konzentration enthaltene Natriumchlorid sowie die darin ebenfalls vorhandenen Härtebildner führen in nachteiliger Weise zu einer starken Verminderung des Quellvermögens der Gelbildnersubstanz. Dieser nachteilige Einfluß wird bei der Verwendung von Diammoniumhydrogenphosphat als Trennmittel in erheblichem Maße reduziert. Dabei blockiert das Phosphation die Härtebildner und das Ammoniumion kompensiert den negativen Einfluß des Natriumions auf das Quellvermögen. Besonders vorteilhaft ist die Verwendung des Diammoniumhydrogenphosphats in Mengen von 20 bis 100 Gew.% bezogen auf die Gelbildnersubstanz.

Die Darstellung des Löschwasserzusatzes erfolgt in bevorzugter Weise, indem die Gelbildnersubstanz mit z.B. 50 Gew.% Diammoniumhydrogenphosphat in einem hochtourigen Mischer trokken vermischt wird. Dabei werden die Diammoniumhydrogenphosphatkristalle zerschlagen. Gleichzeitig düst man 10 bis 30 Gew.% Wasser bezogen auf die Gelbildnersubstanz als Nebel ein. Hierdurch werden die Gelbildnerteilchen kurzzeitig klebrig und das Diammoniumhydrogenphosphat wird dauerhaft auf der Oberfläche der Gelbildnerteilchen fixiert.

## Patentansprüche

1. Löschwasserzusatz, enthaltend einen stark quellenden wasserunlöslichen hochpolymeren Stoff als Gelbildner, dadurch gekennzeichnet, daß die Gelbildnerteilchen mit Diammoniumhydrogenphosphat ummantelt sind.

2. Löschwasserzusatz nach Anspruch 1, dadurch gekennzeichnet, daß das Diammoniumhydrogenphosphat in einer Menge von 20 bis 100 Gew.%, bezogen auf die Menge des Gelbildners, vorliegt.

3. Löschwasserzusatz nach einem der Ansprüche 1 oder 2, dadurch gekennzeichnet, daß der Gelbildner ein mäßig vernetztes wasserunlösliches Acryl- oder Methacrylsäurecopolymerisat ist.

## Claims

1. An additive for water fire-extinguishers, containing a greatly-expanding, water-insoluble, high-polymer substance as a gelling agent, characterised in that the gelling agent particles are coated with diammonium hydrogen phosphate.

2. An additive for water fire-extinguishers according to Claim 1, characterised in that the diammonium hydrogen phosphate is present in a quantity of 20 to 100% by weight, relative to the quantity of the gelling agent.

3. An additive for water fire-extinguishers according to one of Claims 1 or 2, characterised in that the gelling agent is a moderately crosslinked, water-insoluble acrylic or methacrylic copolymer.

## Revendications

1. Additif pour eau d'extinction, contenant comme gélifiant une substance insoluble dans l'eau qui est un haut polymère gonflant fortement, caractérisé en ce que les particules de gélifiant sont enveloppées d'hydrogénophosphate de diammonium.

2. Additif pour eau d'extinction suivant la revendication 1, caractérisé en ce que l'hydrogénophosphate de diammonium est présent en une quantité de 20 à 100 % en poids par rapport à la quantité de gélifiant.

3. Additif pour eau d'extinction suivant l'une des revendications 1 et 2, caractérisé en ce que le gélifiant est un copolymère d'acide acrylique ou d'acide méthacrylique insoluble dans l'eau, modérément réticulé.